# EUROPÄISCHE PATENTSCHRIFT

(11) **EP 2 774 816 B1**
(45) Veröffentlichungstag und Bekanntmachung des Hinweises auf die Patenterteilung: **16.09.2015**
(21) Anmeldenummer: 14157783.3
(22) Anmeldetag: 05.03.2014
(51) Int. Cl.: B60R 9/06

(54) **Rückwandträger**
Rear luggage carrier
Porte-charge arrière

(30) Priorität: 05.03.2013 DE 202013100938 U
(43) Veröffentlichungstag der Anmeldung: 10.09.2014
(73) Patentinhaber: SAWIKO Fahrzeugzubehör GmbH, 49434 Neuenkirchen-Vörden (DE)
(72) Erfinder: Winter, Ralf, 49179 Ostercappeln (DE); Leinker, Dirk, 49152 Bad Essen (DE)
(74) Vertreter: Ernicke, Hans-Dieter

(56) Entgegenhaltungen:
- DE-A1- 4 011 315

## Beschreibung

Die Erfindung betrifft einen Rückwandträger für Fahrzeuge mit den Merkmalen im Oberbegriff des Hauptanspruchs.

Ein solcher Rückwandträger ist aus der DE 87 15 013 U1 bekannt. Der Rückwandträger ist als heckseitiger Teil eines Dachgepäckträgers ausgebildet, welcher in üblicher Weise an den seitlichen Dachrinnen des Fahrzeugdachs festgeklemmt wird. Der Rückwandträger wird von zwei aufrechten Längsarmen gebildet, die an der Oberseite mit dem Dachgepäckträger verbunden sind und an der Unterseite mittels Adaptern an einem fahrzeuginnenseitigen Teil eines Türscharniers befestigt sind. An der Übergangsstelle zwischen den Längsarmen und dem Dachgepäckträger kann ein Querträger eingezogen sein, der mit Abstand über dem Fahrzeugdach schwebt.

Die DE 195 35 006 A1 offenbart einen anderen Rückwandträger, dessen Stützrahmen mehrere Längs- und Querarme aufweist, wobei die Querarme mit Ihren Enden mittels Adaptern an den heckseitigen Türscharnieren befestigt sind. Außerdem ist der obere Querarm mittels Abstandshaltern und eines Bandes mit Haken an der Oberkante der Hecktüren mit Federspannung angehängt. Die beiden vorbekannten Rückwandträger weisen außerdem noch ein mit dem stationären Stützrahmen verbundenes Traggestell für eine Lastaufnahme, insbesondere in Form eines Fahrradträgers, auf.

Die DE 40 11 315 A1 befasst sich ebenfalls mit einem Rückwandträger, wobei ein U-förmiger Stützrahmen mittels Beschlägen am oberen seitlichen Dachrand und an der Stoßstange befestigt und abgestützt ist. An dem Stützrahmen ist schwenkbar ein Traggestell in Form eines Fahrradträgers angeordnet.

Es ist Aufgabe der vorliegenden Erfindung, einen verbesserten Rückwandträger aufzuzeigen.

Die Erfindung löst diese Aufgabe mit den Merkmalen des Hauptanspruchs.
Der beanspruchte Rückwandträger hat den Vorteil einer verbesserten Stabilität und Funktionalität. Er kann außerdem in unterschiedlichen Stufen ausgebaut und an verschiedene Fahrzeuge sowie Funktionserfordernisse adaptiert werden.

Die Befestigung des Stützrahmens mit einem Leuchtenadapter an einer dachseitigen Fahrzeugleuchte, insbesondere einer Bremsleuchte oder an deren Leuchtenaufnahme, insbesondere einem Karosserieausschnitt, hat verschiedene Vorteile. Einerseits kann eine besonders gute und stabile Abstützung des Stützrahmens im Dachbereich des Fahrzeugs geschaffen werden. Ein Bügel- oder Rahmenhalter des Leuchtenadapters kann für die Abstützung und axiale Distanzierung des Stützrahmens vom Fahrzeugheck sorgen.

Der Stützrahmen kann andererseits an einer tiefer liegenden Stelle mit einem Adapter am Fahrzeug, insbesondere an einem Türscharnier befestigt werden. Dies ermöglicht eine bevorzugt L- oder U-förmige bügelartige Ausgestaltung des Stützrahmens und dessen stabile Befestigung an der Fahrzeugkarosserie. Die ein oder mehreren Hecktüren des Fahrzeugs können dabei ungehindert geöffnet und geschlossen werden.

Ein weiterer Vorteil sind die minimalen Eingriffe an der Fahrzeugkarosserie. Für die Adapter, insbesondere die Leuchten- und Scharnieradapter, können weitgehend vorhandene Bauteile des Fahrzeugs als Befestigungs- und Anbaustellen benutzt werden. Eine dachseitige Fahrzeugleuchte, insbesondere eine dritte Bremsleuchte am Fahrzeugdach kann mit Ihrer Funktion beibehalten werden. Sie kann insbesondere von der Fahrzeugkarosserie an den Adapter verlegt werden. Sie kann dabei in einer klein bauenden Variante an einem beschlagartigen Bügelhalter oder in bzw. an einem Gehäuses des Adapaters angeordnet sein. Das Adaptergehäuse kann an einen Aufbau des Fahrzeugs in der Formgebung angepasst und abgedichtet sein.

Ein besonderer Vorteil des Leuchtenadapter ist auch eine Verbesserung der Leitungsführung. Bei der Verlagerung der Fahrzeugleuchte an den Adapter können bereits vorhandene Leitungen benutzt werden. Die vorhandene Fahrzeugleuchte kann beibehalten oder gegen eine andere Leuchte, insbesondere eine flach bauende und ggf. mehrfarbige LED-Leuchte getauscht werden. Der Leuchtenadapter kann ferner ein Zubehörteil, insbesondere eine Rückfahrkamera, ein Heckfeldbeleuchtung, eine Sensorik oder dgl., aufweisen.

Außerdem können am Bügelhalter oder innerhalb eines Gehäuses des Adapaters zusätzliche Leitungen in das Fahrzeug hinein und aus dem Adapter herausverlegt werden. Hierdurch können externe Verbraucher, z.B. Dachaufbauten, insbesondere Dachantennen, Satellitenschüsseln, zusätzliche Heckbeleuchtungen oder dgl. besonders schonend, sicher und einfach an das elektrische Bordnetz des Fahrzeugs angeschlossen werden. Es ist für die verschiedenen Ausführungsvarianten des Leuchtenadapters außerdem von Vorteil, wenn der Adapterkorpus eine Durchgangsöffnung oder einen Leitungsanschluss aufweist.

Der Scharnieradapter hat den Vorteil, dass er außenseitig am Türscharnier angreifen kann, was die Montage erleichtert und die Abstützung verbessert. Zudem können Eingriffe in den Heckausschnitt bzw. den Fahrzeuginnenraum reduziert oder vermieden werden, was für die Türenabdichtung vorteilhaft ist. Ein Adapterangriff an einer fahrzeugfesten äußeren Scharnierplatte hat zudem den Vorteil einer fehlenden oder minimalen Einschränkung der Hecktüren-Kinematik. Die Ausbildung des bevorzugten Scharnieradapters mit Stützelement/Fixierelement oder abgewinkelter Flanschplatte hat eigenständige erfinderische Bedeutung und kann auch bei konventionellen Rückwandträgern ohne den vorgenannten Leuchtenadapter zum Einsatz kommen.

Der stationär am Fahrzeug befestigbare Stützrahmen des Rückwandträgers kann mit einem Dachträger ergänzt oder an einen solchen angeschlossen werden. Der Rückwandträger kann hierdurch eine erweiterte Funktionalität erhalten. Außerdem wird seine Stabilität und Befestigung noch weiter verbessert.

Am fahrzeugfesten Stützrahmen kann ein Traggestell starr oder vorzugsweise beweglich angeordnet und gelagert sein. Das Traggestell kann in unterschiedlichster Weise ausgebildet sein und kann zur Aufnahme unterschiedlichster Lasten dienen. Vorteilhafterweise kann das Traggestell als Plattform und/oder als Ersatzradträger und/oder als starrer oder beweglicher Tragrahmen, insbesondere als Fahrradträger, ausgebildet sein. Es kann auch eine Verstelleinrichtung aufweisen, welche die Handhabung verbessert und erleichtert, insbesondere das Be- und Entladen vereinfacht und die Ergonomie verbessert.

Die Verstelleinrichtung kann ein am Tragrahmen angreifendes Hubmittel und eine feste oder bevorzugt umstellbare Übersetzung aufweisen. Ferner ist ein angebauter oder abnehmbarer Betätiger, z.B. eine Handkurbel für einen Kurbel- und Wickeltrieb von Vorteil.

Das Traggestell, insbesondere sein Gestellbügel, kann schwenkbar am Stützrahmen gelagert sein, vorzugsweise um eine vertikale Schwenkachse. Zusätzlich ist eine Lagerung und Abstützung am Fahrzeug, z.B. an einem Türscharnier, möglich. Dies verbessert die Stützung und Führung des Gestellbügels in aufgeklappter Öffnungsstellung. Mit einer Stelleinrichtung können der Gestellbügel und das Lager zur Kompensation lastbedingter Verformungen vorgespannt werden. An einem Gestellbügel kann auch die Verstelleinrichtung abgestützt sein.

In einer Variante des Scharnieradapters ist sein Stützelement bolzen- oder hülsenartig ausgebildet. Das zugehörige und am Stützelement anschließbare Fixierelement kann als Klemme ausgebildet sein.

In den Unteransprüchen sind weitere vorteilhafte Ausgestaltungen der Erfindung angegeben.

Die Erfindung ist in den Zeichnungen beispielhaft und schematisch dargestellt. Im einzelnen zeigen:
- Figur 1:: eine perspektivische Heckansicht eines Fahrzeugs mit einem montierten Rückwandträger,
- Figur 2:: eine Seitenansicht zu Figur 1,
- Figur 3:: eine perspektivische Dachansicht des Fahrzeugs und des Rückwandträgers mit einem Dachträger,
- Figur 4:: eine perspektivische Heckansicht gemäß Figur 1 mit einem abgeschwenkten Rückwandträger,
- Figur 5:: eine Seitenansicht des Rückwandträgers in verschiedenen Betriebsstellungen und
- Figur 6 bis 10:: die Einzelteile und eine Montage des Rückwandträgers am Fahrzeugheck in verschiedenen Schritten,
- Figur 11 bis 13:: eine Variante des Rückwandträgers an einem Fahrzeugheck in verschiedenen Ansichten.

Die Erfindung betrifft einen Rückwandträger (1) für Fahrzeuge (2). Die Erfindung betrifft ferner ein Fahrzeug (2) mit einem Rückwandträger (1). Der Rückwandträger (1) wird auch als Heckträger bezeichnet.

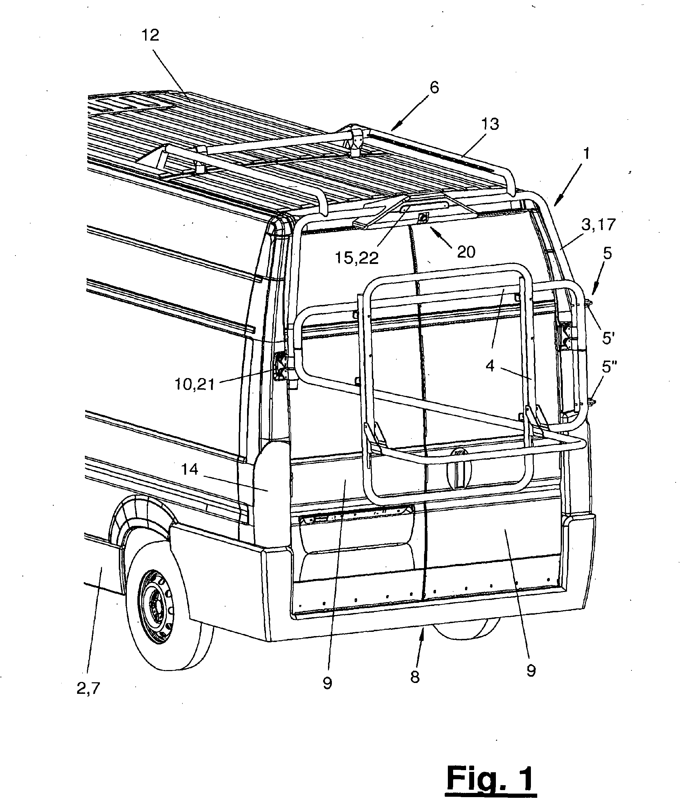

Figur 1 bis 10 und 11 bis 13 zeigen Varianten des Rückwandträgers (1) und seiner Anordnung, insbesondere Befestigung, an einem Fahrzeug (2).

Der Rückwandträger (1) weist in beiden Varianten einen Stützrahmen (3) auf, der mit einem Befestigungsmittel (20) ortsfest an einem Fahrzeug (2) montiert wird. Der Rückwandträger (1) kann ferner ein Traggestell (4) zur Aufnahme einer Last aufweisen, welches mit dem Stützrahmen (3) starr oder beweglich, insbesondere schwenkbar, verbunden werden kann. Ferner kann der Rückwandträger (1) einen Dachträger (6) aufweisen, der ebenfalls mit dem Stützrahmen (3) verbunden werden kann.

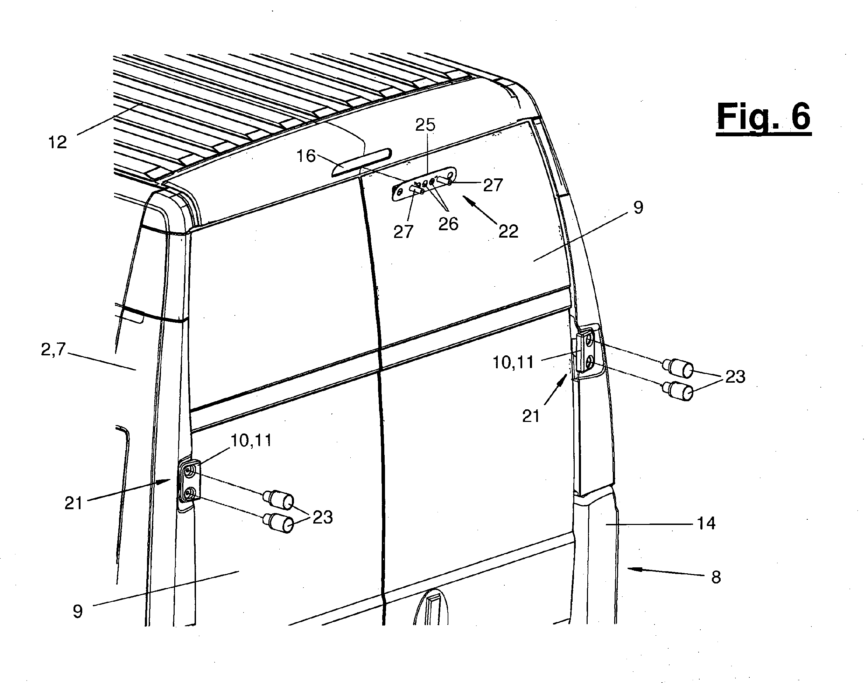

Die Montage des Stützrahmens (3) erfolgt bevorzugt am Fahrzeugheck (8). Das in den Zeichnungen abgebrochen dargestellte Fahrzeug (2) weist eine Karosserie bzw. einen Aufbau (7) auf, der z.B. als Kastenaufbau ausgebildet ist. Am Heck (8) weist der Aufbau (7) eine oder mehrere Hecktüren (9) auf, die mittels Türscharnieren schwenkbar am Aufbau (7) bzw. an der Fahrzeugkarosserie gelagert sind. Die Türscharniere (10) haben in den dargestellten und bevorzugten Ausführungsbeispielen eine fahrzeugfeste Scharnierplatte (11), die am Heck bzw. an der Fahrzeugrückseite angeordnet und montiert ist. Die Scharnierplatte (11) ist von außen zugänglich und wird z.B. mit ein, zwei oder mehr Befestigungsmitteln, insbesondere Schrauben, an der Karosserie befestigt. Figur 6 zeigt diese Anordnung. Der bewegliche und mit der Fahrzeugtüre (9) verbundene Teil des Türscharniers (10) kann ebenfalls außenseitig oder innenseitig und verborgen im Heckausschnitt des Aufbaus (7) bzw. der Fahrzeugkarosserie angeordnet sein.

Der Aufbau bzw. die Karosserie (7) weist ein Dach (12) auf, an dessen heckseitigem Rand im mittleren Bereich eine Fahrzeugleuchte (15) angeordnet ist. Dies kann eine Dachbremsleuchte oder eine sogenannte dritte Bremsleuchte sein. Ferner sind am Heck (8) weitere Rückleuchten (14) am mittleren oder unteren Fahrzeugbereich angeordnet. Das Fahrzeug (2) ist in den gezeigten Ausführungsformen als Kastenwagen oder Van ausgebildet. Dies kann z.B. ein Transporter, ein Wohnmobil, ein Bus oder dergleichen sein. In einer anderen Ausführungsform kann das Fahrzeug (2) ein Geländewagen sein. Daneben sind weitere Fahrzeugvarianten möglich.

Figur 1, 4 und 11 zeigen den Rückwandträger (1) in Anbaustellung am Fahrzeugheck (8), wobei das Traggestell (4) verschiedene Stellungen relativ zum Stützrahmen (3) einnimmt.

Der Stützrahmen (3) weist in den Varianten jeweils zumindest einen oberen Querarm (18) sowie einen aufrechten Längsarm (19) auf, wobei die Arme (18,19) miteinander verbunden und mit dem Befestigungsmittel (20) am Fahrzeug (2) montiert sind. Das Befestigungsmittel (20) weist hierfür mehrere Adapter (21,22) auf.

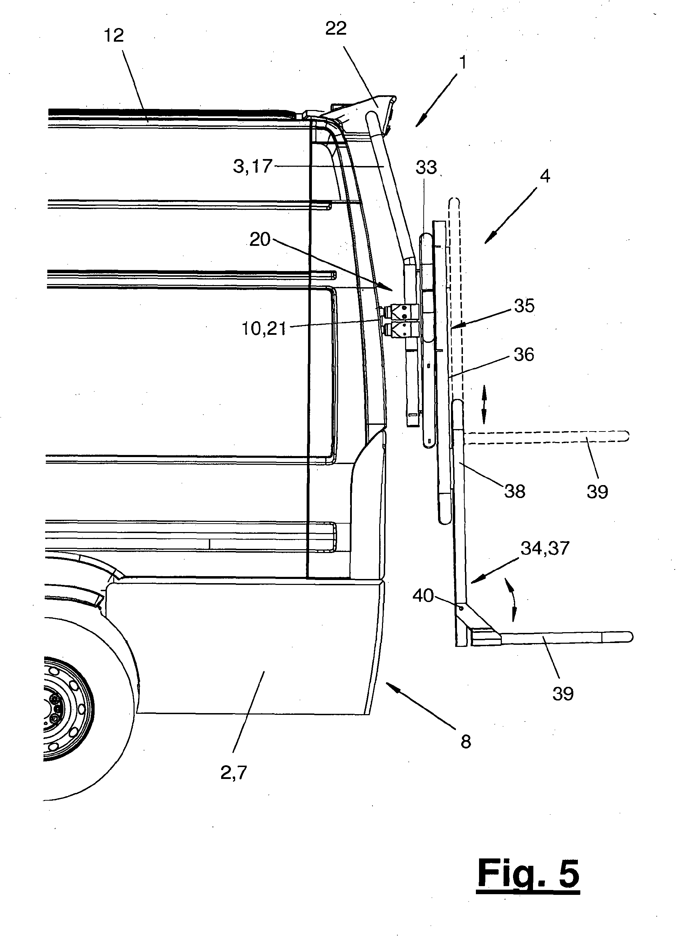

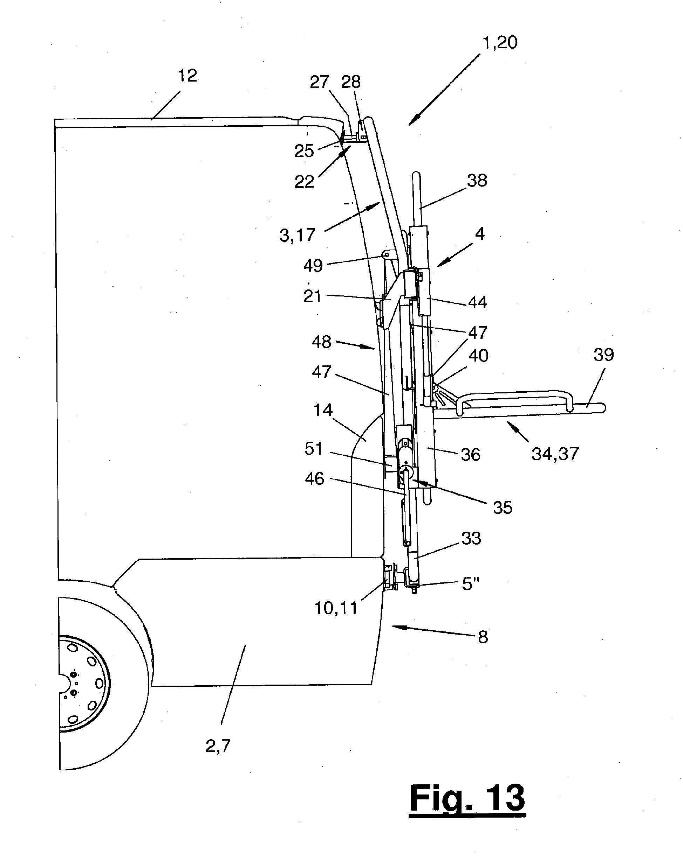

Der Stützrahmen (3) ist bevorzugt als Rahmenbügel (17) ausgebildet. Dieser hat in der Draufsicht bzw. der Heckansicht in Anbaustellung bevorzugt eine umgeklappte L-oder U-Form. In der Seitenansicht gemäß Figur 5 und 13 kann der Stützrahmen (3) bzw. Rahmenbügel (17) außerdem eine geknickte Form haben.

In den gezeigten Ausführungsbeispielen sind an den beiden Enden des Querarms (18) zwei nach unten ragende Längsarme (19) angeordnet. Der Querarm (18) ist mit einem Adapter (22), insbesondere einem Leuchtenadapter, im Bereich der dachseitigen Fahrzeugleuchten (15) am Fahrzeug (2) befestigt. Die ein oder zwei Längsarme (19) sind jeweils mit mindestens einem Adapter (21), insbesondere einem Scharnieradapter, mit einem Türscharnier (10) verbunden und am Fahrzeug (2) befestigt.

In den gezeigten Ausführungsbeispielen reichen die ein oder zwei Längsarme (19) etwa bis zur mittleren Fahrzeughöhe nach unten und enden dort. In einer anderen und nicht dargestellten Ausführungsform können die Längsarme (19) mit ein oder mehreren Querarmen im mittleren oder unteren Fahrzeug- und Heckbereich verbunden sein, wobei sie ggf. bis zum unteren Fahrzeugrand bzw. zur Stoßstange verlängert sind. Alternativ kann auch nur ein Längsarm (19) bis zum unteren Fahrzeugbereich verlängert und dort abgestützt sein.

Wie Figur 1, 4 und 11, 12 verdeutlichen, ist der Stützrahmen (3) mit seinen Armen (18,19) derart an die Kontur des Fahrzeughecks (8) angepasst, dass der Rahmenbügel (17) die ein oder mehreren Hecktüren (9) des Fahrzeugs (2) mit einem seitlichen Abstand außenseitig umgibt, sodass die eine oder mehreren Fahrzeugtüren (9) ungehindert geöffnet werden können. Er kann mit seiner Knickform auch an die seitliche Heckkontur des Fahrzeugs (2) angepasst sein. Wie Figur 5 und 13 in der Seitenansicht verdeutlichen, distanzieren dabei die Adapter (21,22) den Stützrahmen (3) bzw. Rahmenbügel (17) in axialer Richtung vom Fahrzeugheck (8) bzw. von der Fahrzeugrückwand.

Das Traggestell (4) ist mit dem Stützrahmen (3) in einer beliebig geeigneten Weise verbunden. Dies kann eine feste oder lösbare oder bewegliche Verbindung sein. In den gezeigten Ausführungsbeispielen ist jeweils eine bewegliche Verbindung mit einem Lager (5) vorhanden, welches z.B. als Schwenklager ausgebildet und an einem Längsarm (19) angeordnet ist. Der Längsarm (19) kann einen geradem Endabschnitt und eine verlängerte Form haben, wobei das Lager (5) sich im Bereich des Adapters (21), insbesondere Scharnieradapters, befindet.

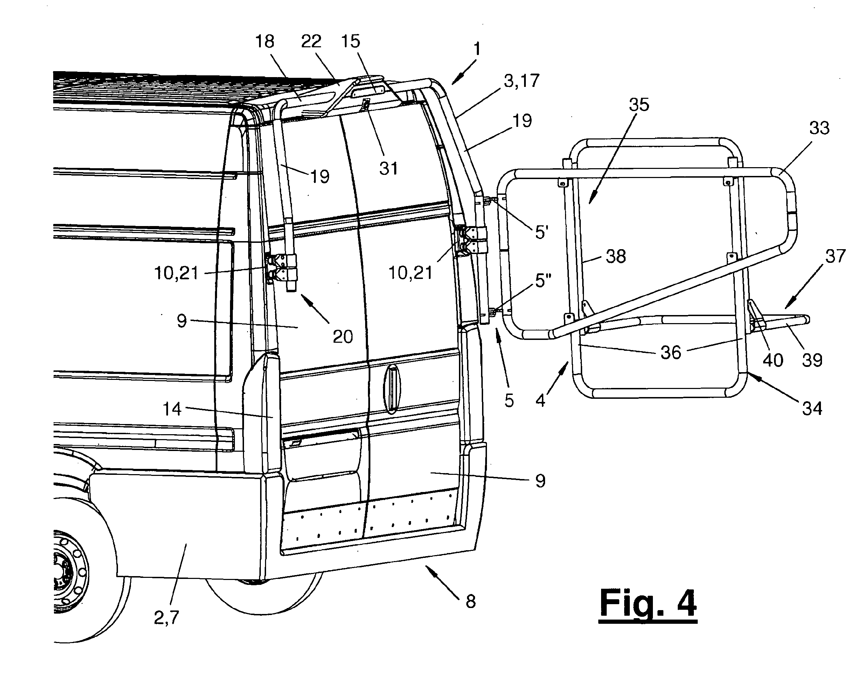

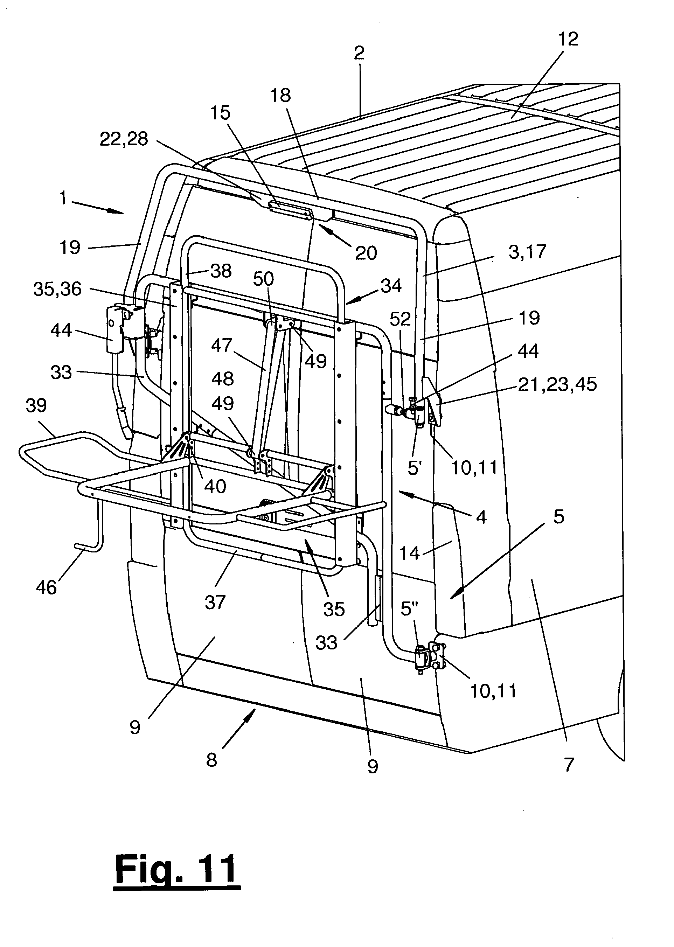

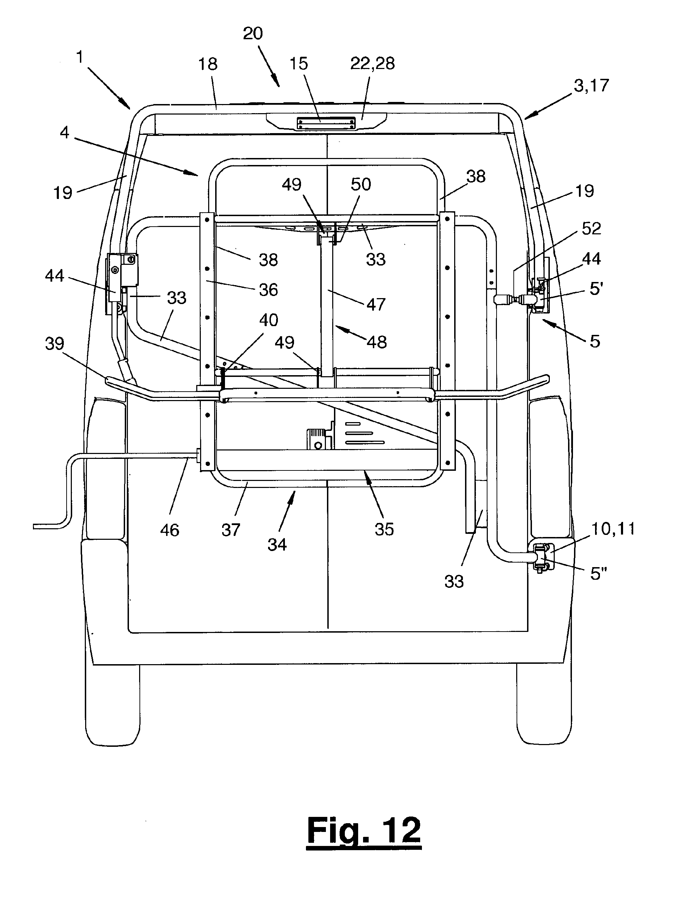

Mit dem Schwenklager (5) kann das Traggestell (9) an den Stützrahmen (3) und das Fahrzeugheck (8) angeschwenkt und in der in Figur 1 und 12 gezeigten Schließstellung in geeigneter Weise arretiert werden. Dies kann z.B. durch eine Lagerblockade oder durch ein mit dem anderen Längsarm (19) zusammenwirkendes Arretiermittel (44) erfolgen. Dies kann z.B. ein in Figur 11 und 12 dargestellter Schwenkverschluss sein. Andererseits kann das Traggestell (9) mit einem weiteren in Figur 11 und 12 gezeigten und im Bereich des Lagers (5) angeordneten Arretiermittel (44) auch in der Öffnungsstellung arretiert werden. Figur 4 zeigt die abgeschwenkte Öffnungsstellung mit einem bevorzugt 90° oder mehr betragenden Öffnungs- oder Schwenkwinkel.

In der Variante von Figur 1 bis 10 ist das Traggestell (9) nur am Stützrahmen (3) über das Lager (5) gelagert und abgestützt. Das Lager (5) weist hierfür zwei Lagerelemente (5',5") auf, die gemäß Figur 1 und 4 mit Abstand übereinander am Längsarm (19) angeordnet sind.

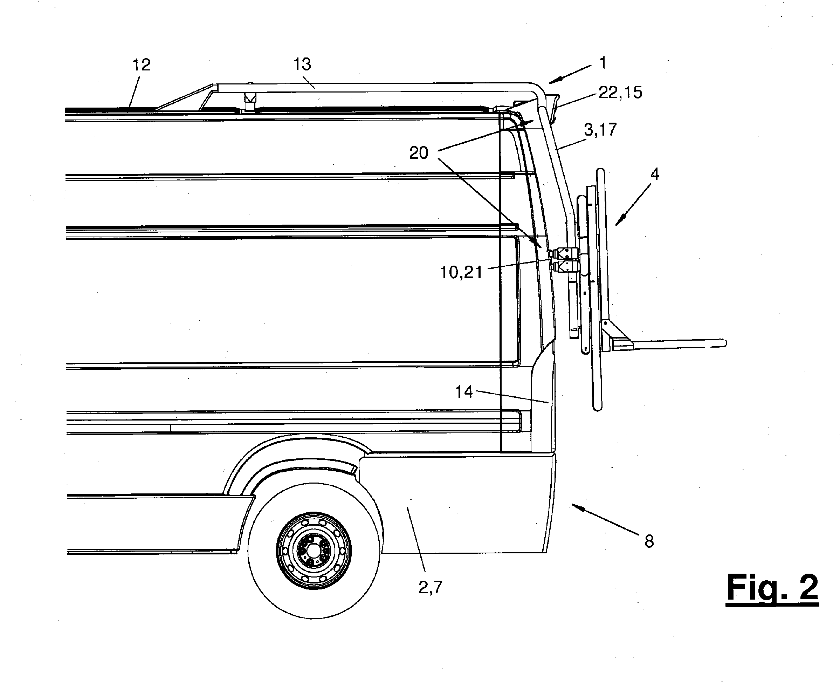

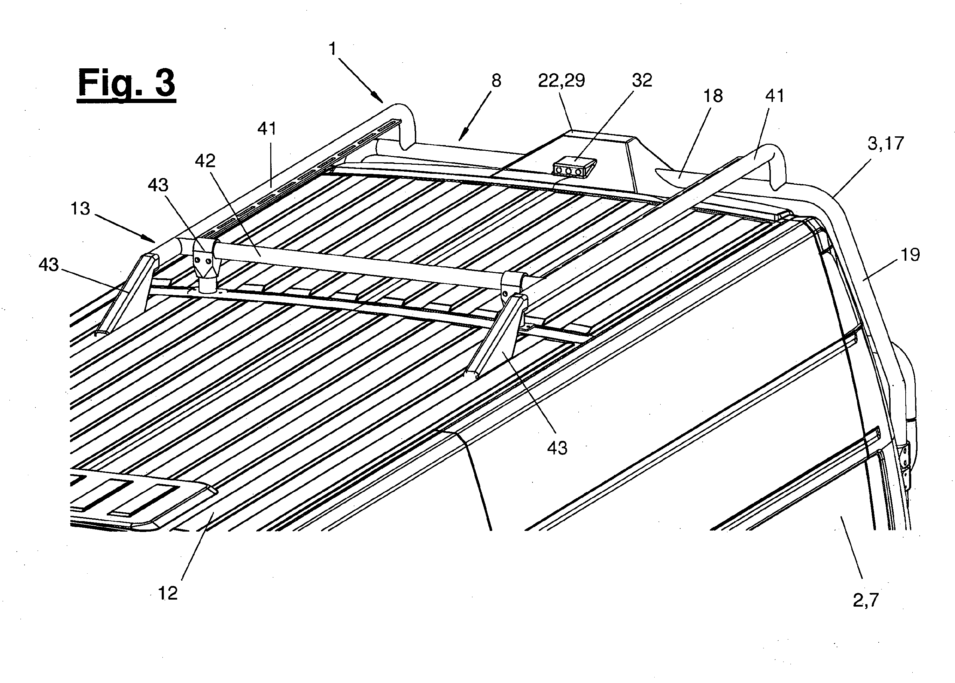

Figur 1 verdeutlicht außerdem eine Variante des Rückwandträgers (1) mit einem Dachträger (6). Figur 2 und 3 zeigen hierzu weitere Ansichten. Der Dachträger (6) erstreckt sich vom heckseitigen Stützrahmen (3) ausgehend axial zur Fahrzeugfront und ist am Dach (12) mit einem Fixiermittel (43) abgestützt und befestigt. Der Dachträger (6) weist z. B. zwei parallele Längsholme (41) auf, die an ihren rückwärtigen Enden mit dem Stützrahmen (3), insbesondere seinem dachseitigen Querarm (18), verbunden sind und die sich jeweils in der Nähe des Dachrandes nach vorn erstrecken. Im vorderen Bereich sind die Längsarme (41) durch einen oder mehrere Querholme (42) miteinander verbunden und zu einem Rechteckrahmen ausgesteift.

Das Fixiermittel (43) kann aus Stützarmen bestehen, die einerseits an der Dachhaut und andererseits an einem Holm (41,42) befestigt sind. Die Holme (41,42) können als Rohre, insbesondere als Rundrohre, ausgebildet sein. Ein oder mehrere Holme (41,42) können eine in Figur 3 dargestellte flache Längsschiene mit Löchern zur Montagezwecken aufweisen. Hier kann ein Behälter, eine Tragplatte, eine Satellitenschüssel oder dgl. befestigt werden. Am Stützrahmen (3), insbesondere am oberen Querarm (18) kann eine Aufstieghilfe, z.B. eine Leiter, lösbar befestigt werden.

Der eingangs erwähnte Leuchtenadapter (22) dient in den gezeigten Varianten jeweils zur Befestigung des oberen Querarms (18) an einer dachseitigen Fahrzeugleuchte (15) oder an deren Leuchtenaufnahme (16). Der Leuchtenadapter (22) weist hierfür einen mit dem Fahrzeug (2) verbindbaren Halter (28) auf, der für den distanzierten Halt des Stützrahmens (3), insbesondere des Querarms (18), am Fahrzeug (2) sorgt. Der Halter (28) hat die Funktion eines Rahmen- oder Bügelhalters.

Die Leuchtenaufnahme (16) ist z.B. ein in Figur 6 dargestellter Karosserieausschnitt an der Rückseite des Dachholms des Aufbaus oder der Karosserie (7). Wenn die Fahrzeugleuchte (15) eine entsprechende Stabilität und eine geeignete Formgebung aufweist, kann der Leuchtenadapter (22) direkt an der vorhandenen dachseitigen Fahrzeugleuchte (15) angreifen. In den gezeigten und bevorzugten Ausführungsformen erfolgt der Angriff und die Montage an der besagten Leuchtenaufnahme (16).

Wie Figur 6 verdeutlicht, weist der Leuchtenadapter (22) einen Adapterkorpus (25) auf, der an die dachseitige Leuchtenaufnahme (16), insbesondere den Karosserieausschnitt, des Fahrzeugs (2) angepasst ist und dort verankert werden kann. Der Adapterkorpus (25) kann hierfür eine frontseitige Deckplatte zur Überdeckung des Ausschnitts (16) und hieran angeordnete Ankermittel aufweisen. Die Ankermittel können in geeigneter Weise in den Ausschnitt (16) greifen und eine feste Verbindung mit den umgebenden Ausschnittsrändern oder der angrenzenden Karosseriewandung herstellen. Die Deckplatte kann ggf. alternativ oder zusätzlich außerhalb des Ausschnitts (16) an die umgebende Karosseriewandung angeschraubt oder in anderer Weise daran befestigt werden.

Der Adapterkorpus (25) weist ferner eine oder mehrere Durchgangsöffnungen (26) auf, durch welche eine oder mehrere Leitungen beliebiger Art, vorzugsweise elektrische Kabel, verlegt werden können. Dies kann insbesondere das Anschlusskabel der Fahrzeugleuchte (15) sein. Über die Durchgangsöffnung(en) (26) können darüber hinaus weitere und ggf. andere Leitungen über den Leuchtenadapter (22) in den Fahrzeuginnenraum hinein und herausgeführt werden. Mittels eines am Adapter (22) angeordneten und z.B. zur Fahrzeugfront weisenden Leitungseinlasses (32) kann eine Leitungsverbindung zu externen Verbrauchern, z.B. zu einer Antenne, insbesondere einer Satellitenschüssel, zu externen Leuchten oder dgl. hergestellt werden.

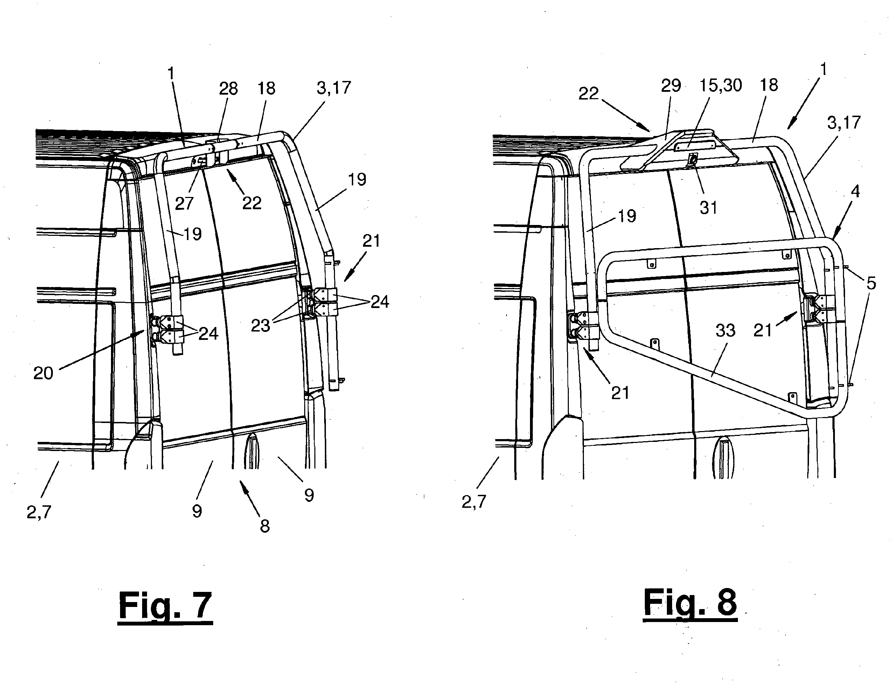

Wie Figur 6 verdeutlicht, weist der Adapterkorpus (25) neben der oder den Durchgangsöffnung(en) (26) einen oder mehrere abstehende massive oder hohle Tragbolzen (27) auf, die z.B. axial nach hinten gerichtet sind. Sie dienen gemäß Figur 7 zur Aufnahme eines Halters (28), an dem der Querarm (18) befestigt werden kann. Der Halter oder Bügelhalter (28) kann z.B. einen aufrechten und nach hinten offenen U-förmigen Halteflansch mit einem daran befestigten Rohrstück aufweisen, an dem der Querarm (18) befestigt ist. Der Halter (28) kann einteilig oder mehrteilig sein, wobei in einer mehrteiligen Ausführung die Armteile in das Rohr eingesteckt und hier durch Blindniete oder dgl. befestigt sind. Der Halter (28) kann den Querarm (18) axial von der Fahrzeugrückseite distanzieren.

Die Arme (18,19) können als Rohre, insbesondere als Rundrohre, ausgebildet sein. Die Übergangsstelle zwischen Querarm (18) und Längsarm (19) kann durch eine Rohrbiegung oder durch einen eingesetzten Eckverbinder geschaffen werden.

Wie Figur 8 verdeutlicht, kann der Leuchtenadapter (22) in der einen Variante ein Gehäuse (29) aufweisen, welches den Adapterkorpus (25) und den Halter (28) dichtend umgibt und dabei an ein oder beiden Adapterteilen (25,28) befestigt ist. Das Gehäuse (29) ist an die Dachform des Fahrzeugs (2) angepasst und liegt mit seinen Rändern dicht am Dachrand bzw. Dachholm an. Das Gehäuse (29) kann z.B. die gezeigte trapezoide Form haben.

Das Gehäuse (29) kann eine oder zwei seitliche Öffnungen für den abgedichteten Einlass des oberen Querarms (18) oder seiner Armteile aufweisen. An der zur Fahrzeugfront weisenden Gehäuseseite kann der in Figur 3 gezeigte Leitungseinlass (32) mit Anschlussmöglichkeit für ein oder mehrere Leitungen angeordnet sein. An der vom Fahrzeugheck (8) nach hinten weisenden Stirnseite des Gehäuses (29) kann die dachseitige Fahrzeugleuchte (15) und/oder ein Zubehörteil (31) angeordnet sein.

Für eine Fahrzeugleuchte (15), insbesondere Dachbremsleuchte, kann die Original-Leuchte des Fahrzeugs (2) verwendet werden, die von der Leuchtenaufnahme (16) demontiert und an der besagten Gehäusestirnseite angebaut wird. Alternativ kann die Originalleuchte entfernt und ein eigener adaptierter Leuchteneinsatz (30) des Adapters (22) verwendet und an das Leuchtenkabel angeschlossen werden. Das Zubehörteil (31) kann einzeln oder mehrfach vorhanden sein. Es kann z.B. eine in den Zeichnungen angedeutete Rückfahrkamera sein, welche über den Adapter (22) an die Fahrzeugelektrik und an einem im Fahrzeug (2) befindlichen Monitor angeschlossen werden kann. Ein anderes Zubehörteil (31) kann eine Rückraumbeleuchtung sein, die vom Gehäuse (29) vertikal oder schräg nach unten strahlt und die ebenfalls an das Bordnetz des Fahrzeugs (2) angeschlossen werden kann. Ein anderes Zubehörteil (31) kann eine Sensorik sein, z.B. ein Abstandssensor oder dgl..

Der Scharnieradapter (21) kann in beliebig geeigneter Weise ausgebildet und an die jeweiligen Gegebenheiten des Fahrzeugs (2) angepasst sein. Figur 6 und 7 sowie 11 und 13 zeigen beispielhafte Gestaltungen des Scharnieradapters (21) für ein heckseitiges Türscharnier (10) mit der erwähnten externen stationären Scharnierplatte (11). Diese Ausbildung und Anordnung des Scharnieradapters (21) hat eine eigenständige erfinderische Bedeutung und kann alternativ bei konventionellen Rückwandhaltern eingesetzt werden, die z.B. nach dem eingangs genannten Stand der Technik ausgebildet sind.

Der Scharnieradapter (21) weist in der einen Variante ein oder mehrere, insbesondere zwei Stützelemente (23) auf, die an der Scharnierplatte (11) statt der Scharnierschrauben angeschraubt oder mit den Scharnierschrauben befestigt werden. Die z.B. hülsen- oder bolzenartigen Stützelemente (23) ragen nach hinten von der Scharnierplatte (11) weg zur Bildung der eingangs erwähnten axialen Distanz des Stützrahmens (3). An dem oder den Stützelement(en) (23) können ein oder mehrere Fixierelemente (24) befestigt werden, die eine feste Verbindung mit dem zugehörigen Längsarm (19) herstellen. Die Verbindung kann fest oder lösbar sein. Ein Fixierelement (24) kann z.B. als Klemme oder sogenannter T-Verbinder ausgeführt sein. Das Stützelement (23) kann als Schraubhülse oder Schraubbolzen mit einem Gewinde ausgeführt sein. Es kann alternativ für eine Klemmverbindung, z.B. glattwandig, ausgebildet sein.

Figur 5 sowie 8 bis 10 zeigen eine beispielhafte Ausführung des Traggestells (4). Das Traggestell (4) weist ein Gestellbügel (33) mit dem besagten Lager (5) und mit einem Tragelement (34) für eine Last auf. Das Tragelement (34) und der Gestellbügel (33) können starr und fest öder lösbar miteinander verbunden sein. Ein Tragelement (34) kann z.B. als Ersatzradhalter, Behälter, Skiträger oder dgl. ausgebildet sein.

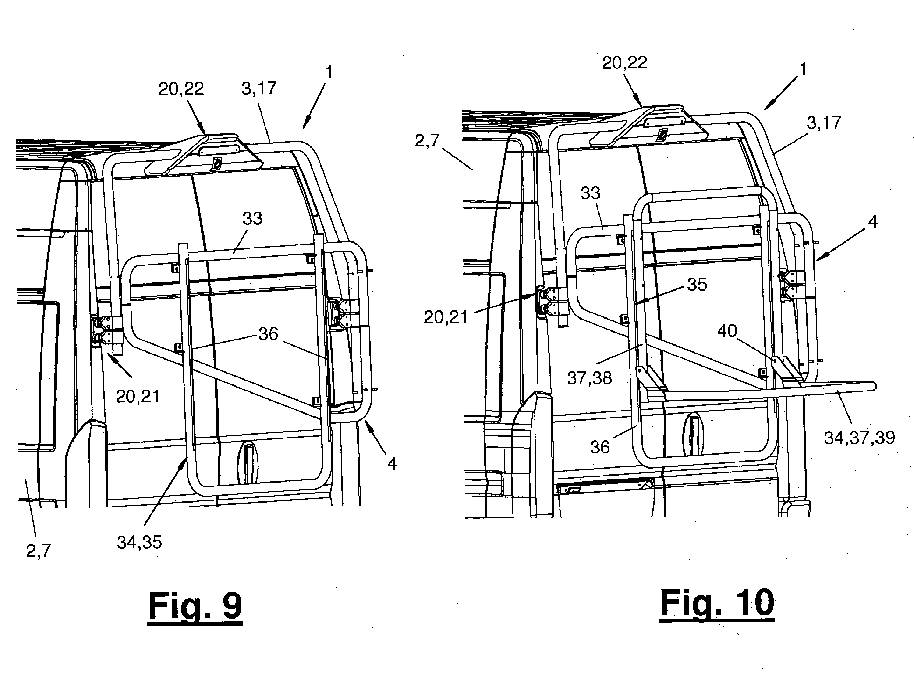

In der gezeigten Ausführungsform weist das Traggestell (4) eine Verstelleinrichtung (35) zwischen dem Gestellbügel (33) und dem Tragelement (34) auf. Die Verstelleinrichtung (35) ist gemäß Figur 5 als Hubeinrichtung ausgebildet, mit welcher das Tragelement (34) in der Höhe verstellt und für eine ergonomisch günstige Be- und Entladung abgesenkt werden kann. Hierfür weist die Verstelleinrichtung (35) z.B. die in Figur 9 dargestellte rahmenartige Ausbildung mit einem U-Bügel und mit einer Führung (36), z.B. zwei vertikalen Führungsschienen, auf. Alternativ kann eine Verstelleinrichtung (35) eine andere Ausbildung und Kinematik, z.B. eine Hebel- und Schwenkkonstruktion, aufweisen.

Das Tragelement (34) kann in den gezeigten Ausführungsbeispielen eine Plattform oder einen Tragrahmen (37) aufweisen und kann insbesondere mit angebauten Zusatzelementen als Fahrradträger fungieren. Die Plattform bzw. der Tragrahmen (37) können mittels eines Klapplagers (40) zur Verkleinerung der Störkontur einklappbar sein. Der in Figur 1, 5 und 10 dargestellte Tragrahmen (37) besteht aus zwei aufrechten Tragarmen (38), die ggf. mit der Führung (36) verbunden sind und die ggf. am oberen und/oder unteren Ende mit einem Querarm zu einem umlaufend geschlossenen Rahmen verbunden sind. An den aufrechten Tragrahmen (38) können ein oder mehrere quer nach hinten abstehende Tragarme (39) starr oder mittels des Klapplagers (40) schwenkbar verbunden sein.

Figur 11 bis 13 zeigen eine Variante des Rückwandträgers (1), die weitgehend mit den Ausführungsformen von Figur 1 bis 10 übereinstimmt und einige nachfolgend erläuterte Abwandlungen aufweist.

Eine Abwandlung betrifft den Leuchtenadapter (22) und den Stützrahmen (3). Der Rahmenbügel (17) mit seinen Armen (18,19) ist z.B. einteilig ausgebildet. Der Leuchtenadapter (22) hat eine kleinere Bauform, wobei die Fahrzeugleuchte (15) am Bügelhalter (28) angeordnet ist. Der Halter (28) weist einen vom Querarm (18) vertikal oder schräg abstehenden Halteflansch mit einem Leuchteneinsatz (30) für eine flach bauende Fahrzeugleuchte (15), z.B. rote und weiße LED-Leuchten für Brems- und Rückfahrlicht, auf. Die Fahrzeugleuchte (15) kann sich geschützt unterhalb des Querarms (18) befinden. Das Zubehörteil (31) fehlt bei dieser Variante, wobei es alternativ ergänzt werden kann.

Der Halter (28) distanziert den Querarm (18) axial von der Fahrzeugrückseite und ist mit einem abgedichtet montierten Adapterkorpus (25) der vorgenannten Art am Dach (12), z.B. an der dortigen Leuchtenaufnahme (16), befestigt. Der Adapterkorpus (25) kann auch in dieser Variante eine Durchgangsöffnung und/oder einen Leitungsanschluss bzw. Leitungseinlass für externe Verbraucher aufweisen. Der Halter (28) und der Querarm (18) können einstückig verbunden, z.B. verschweißt sein. Das Gehäuse (29) kann bei dieser Variante entfallen.

Die Variante von Figur 11 bis 13 zeigt auch einen anderen Scharnieradapter (21) zur Befestigung des Stützrahmens (3) am oberen Türscharnier (10). Der Scharnieradapter (21) ist als abgewinkelte Flanschplatte (45) ausgebildet, die eine Basisplatte und einen davon quer abstehenden steifen Stützarm aufweist. Die Basisplatte ist auf der Scharnierplatte (11) aufgesetzt und befestigt, z.B. angeschraubt. Der Stützarm ist mit einem Längsarm (19) fest verbunden, z.B. verschweißt.

Eine weitere Abwandlung betrifft das Lager (5) des Traggestells (4). Das Traggestell (4), insbesondere sein Gestellbügel (33), ist in der Variante einerseits am Stützrahmen (3) und andererseits direkt am Fahrzeug (2) abgestützt und schwenkbar gelagert. Dies steigert die Stabilität, insbesondere beim Aufschwenken des beladenen Traggestells (4).

Das Lager (5) weist ein einzelnes oberes Lagerelement (5') an einem Längsarm (19) auf, das vorzugsweise in der Nähe des Befestigungsmittels (20) bzw. Scharnieradapters (21) am oberen Türscharnier (10) einer Hecktüre (9) angeordnet ist. Das Lagerelement (5') befindet sich z.B. am Längsarmende unterhalb der Flanschplatte (45). Zwischen dem Lagerelement (5') und dem Gestellbügel (33) ist eine Stelleinrichtung (52) angeordnet, die z.B. mit einer Schraubverbindung und gegenläufigen Gewinden ein Vorspannen des Gestellbügels (33) zur Kompensation von lastbedingten Verformungen bzw. Setzungen ermöglicht.

Das Lager (5) weist zudem ein unteres Lagerelement (5") am Fahrzeug (2) auf, das z.B. am unteren Türscharnier (10) angeordnet und befestigt ist. Es kann auf die dortige Scharnierplatte (11) geschraubt sein. Der Gestellbügel (33) des Traggestells (4) ist entsprechend nach unten bis zum unteren Lagerelement (5") verlängert. Das besagte Arretiermittel (44) für den schwenkbaren Gestellbügel (33) ist in Figur 11 und 12 dargestellt.

Das Tragelement (34) und der ggf. vorhandene Tragrahmen (37) nebst Verstelleinrichtung (35) bzw. Hubeinrichtung können weitgehend wie in der Variante von Figur 1 bis 10 ausgebildet sein. Figur 11 bis 13 zeigen hierfür einige Ergänzungen, die auch bei der ersten Variante eingesetzt werden können.

Für die z.B. als Kurbeltrieb oder Wickeltrieb ausgebildete und am Gestellbügel (33) abgestützte sowie befestigte Verstelleinrichtung (35) ist ein Betätiger (46) vorhanden. Dieser kann manuell bedienbar und z.B. als angebaute oder abnehmbare Handkurbel ausgebildet sein.

Die Verstelleinrichtung (35) weist ein Hubmittel (47) auf, das am Tragelement (34), insbesondere am Tragrahmen (37), angreift und eine ggf. umstellbare Übersetzung (48) aufweisen kann. Das Hubmittel (47) ist biegeelastisch und z.B. als Hubgurt ausgebildet, der einerseits mit dem Tragelement (34) verbunden ist und andererseits mit dem gestellfesten Kurbeltrieb und dessen Trommel (51) auf- und abgewickelt wird. Der Hubgurt (47) läuft von der Trommel (51) nach oben zu einer ebenfalls am Gestellbügel (33) angeordneten drehbaren Umlenkung (49) und von dort nach unten zum Tragelement (34).

In Figur 11 und 12 ist eine für schwere Lasten günstige flaschenzugartige 2:1-Übersetzung (48) dargestellt, bei welcher der Hubgurt (47) über eine weitere drehbare Umlenkung (49) am Tragelement (34) wieder nach oben geführt und mit seinem Gurtende (50) am Gestellbügel (33) befestigt ist. Die Übersetzung (48) kann für leichtere Lasten auf ein 1:1-Verhältnis umgestellt werden, indem das Gurtende (50) am Tragelement (34) statt der dortigen Umlenkung (49) befestigt wird.

Das Tragelement (34), insbesondere der Tragrahmen (37), kann Querstreben für die Umlenkung (49) und das Klapplager (40) der schwenkbaren Tragarme (39) aufweisen. Die Verstelleinrichtung (35) kann selbsthemmend ausgebildet oder mit einer Verriegelung zum Sichern der Hubstellung während der Fahrt ausgerüstet sein.

Abwandlungen der gezeigten und beschriebenen Ausführungsformen sind in verschiedener Weise möglich. Die Merkmale der Ausführungsbeispiele und ihrer Abwandlungen können untereinander beliebig miteinander kombiniert und/oder ggf. ausgetauscht werden.

Der Adapter (21) zur Befestigung eines Längsarms (19) an der Karosserie kann in anderer Weise ausgebildet und mit dem Aufbau bzw. der Karosserie (7) verbunden werden. Ein Scharnieradapter kann an andere Scharnierausbildungen angepasst sein, wobei er z.B. im Heckausschnitt angreifen kann. Er kann z.B. gemäß der DE 87 15 013 U1 ausgebildet sein. Der Adapter (21) kann in einer anderen Ausführung an einer anderen Stelle des Aufbaus bzw. der Karosserie (7), z.B. an einem Heckleuchtenträger, an der Stoßstange oder dgl. angreifen und entsprechend ausgebildet sein.

Der Stützrahmen (3), insbesondere der Rahmenbügel (17), kann eine andere Zahl von Armen (18,19) und eine andere Form aufweisen. Er kann z.B. eine L-Form mit einem Querarm (18) und nur einem Längsarm (19) haben. Der obere Querarm (18) muss sich auch nicht über die gesamte oder einen Großteil der Fahrzeugbreite erstrecken, wie dies in den gezeigten Ausführungsbeispielen der Fall ist.

Statt der gezeigten zwei Hecktüren (9) kann eine einzelne und zeitlich am Aufbau bzw. der Karosserie (7) angeschlagene breite Hecktüre vorhanden sein. Eine einzelne Hecktüre kann alternativ als Heckklappe ausgebildet sein, die im Dachholm- oder Bodenholmbereich des Fahrzeugs (2) angeschlagen ist und eine horizontale Schwenkachse aufweist. Eine solche Heckklappe kann auch unterteilt sein und einen oberen und unteren Klappenteil aufweisen. Auch eine Kombination von Klappe(n) und Schwenktüre(n) ist möglich. Bei einer Klappenausbildung kann der Adapter (21) in anderer Weise ausgebildet sein und an anderer Stelle des Aufbaus bzw. der Karosserie (7) montiert sein.

### BEZUGSZEICHENLISTE

- 1: Rückwandträger, Heckträger
- 2: Fahrzeug
- 3: Stützrahmen stationär
- 4: Traggestell
- 5: Lager, Schwenklager
- 5': Lagerelement
- 5": Lagerelement
- 6: Dachträger
- 7: Aufbau, Kastenaufbau
- 8: Heck
- 9: Hecktüre
- 10: Türscharnier
- 11: Scharnierplatte stationär
- 12: Dach
- 13: Dachreling
- 14: Rückleuchten
- 15: Fahrzeugleuchte, Dachbremsleuchte
- 16: Leuchtenaufname, Karosserieausschnitt
- 17: Rahmenbügel
- 18: Querarm
- 19: Längsarm
- 20: Befestigungsmittel
- 21: Adapter, Scharnieradapter
- 22: Adapter, Leuchtenadapter
- 23: Stützelement, Stützbolzen
- 24: Fixierelement, Klemme
- 25: Adapterkorpus
- 26: Durchgangsöffnung
- 27: Tragbolzen
- 28: Halter, Bügelhalter
- 29: Gehäuse, Adaptergehäuse
- 30: Leuchteneinsatz
- 31: Zubehörteil, Kamera
- 32: Leitungseinlass
- 33: Gestellbügel, Schwenkbügel
- 34: Tragelement
- 35: Verstelleinrichtung
- 36: Führung
- 37: Plattform, Tragrahmen, Fahrradträger
- 38: Tragarm aufrecht
- 39: Tragarm quer
- 40: Klapplager
- 41: Längsholm
- 42: Querholm
- 43: Fixiermittel
- 44: Arretiermittel
- 45: Flanschplatte abgewinkelt
- 46: Betätigung, Handkurbel
- 47: Hubmittel, Hubgurt
- 48: Übersetzung
- 49: Umlenkung
- 50: Gurtende
- 51: Trommel
- 52: Stelleinrichtung

## Patentansprüche

1. Rückwandträger zur Montage am Heck (8) eines Fahrzeugs (2) mit einer Hecktüre (9) und einem Türscharnier (10), wobei der Rückwandträger (1) einen Stützrahmen (3) mit einem oberen Querarm (18) sowie einem aufrechten Längsarm (19) und mit einem Befestigungsmittel (20) zur Heckmontage aufweist, wobei das Befestigungsmittel (20) einen Adapter (21) zur Befestigung eines Längsarms (19) am Fahrzeug (2) aufweist, **dadurch gekennzeichnet, dass** das Befestigungsmittel (20) einen Leuchtenadapter (22) zur Befestigung des Querarms (18) an einer dachseitigen Fahrzeugleuchte (15) oder deren Leuchtenaufnahme (16) des Fahrzeugs (2) aufweist.

2. Rückwandträger nach Anspruch 1, **dadurch gekennzeichnet, dass** der Adapter (21) als Scharnieradapter (21) ausgebildet ist, der zur Befestigung eines Längsarms (19) an einer fahrzeugfesten externen Scharnierplatte (11) eines Türscharniers (10) des Fahrzeug (2) vorgesehen und ausgebildet ist.

3. Rückwandträger nach Anspruch 1 oder 2, **dadurch gekennzeichnet, dass** das Befestigungsmittel (20), insbesondere die Adapter (21,22), den Stützrahmen (3) in Montagestellung mit Abstand vom Fahrzeugheck (8) hält/halten.

4. Rückwandträger nach Anspruch 1, 2 oder 3, **dadurch gekennzeichnet, dass** ein Scharnieradapter (21) ein Stützelement (23) mit einem Fixierelement (24) oder eine abgewinkelte Flanschplatte (45) aufweist und mit den Befestigungsmitteln, insbesondere Schrauben, einer fahrzeugfesten, externen Scharnierplatte (11) am Fahrzeug (2) befestigbar ist.

5. Rückwandträger nach einem der vorhergehenden Ansprüche, **dadurch gekennzeichnet, dass** der Leuchtenadapter (22) einen mit dem Fahrzeug (2) verbindbaren Halter (28) für den distanzierten Halt des Stützrahmens (3), insbesondere des Querarms (18), aufweist.

6. Rückwandträger nach einem der vorhergehenden Ansprüche, **dadurch gekennzeichnet, dass** der Leuchtenadapter (22) einen mit dem Halter (28) verbindbaren Adapterkorpus (25) aufweist, der eine dachseitige Leuchtenaufnahme (16), insbesondere einen Karosserieausschnitt, des Fahrzeugs (2) angepasst und dort verankerbar ist.

7. Rückwandträger nach einem der vorhergehenden Ansprüche, **dadurch gekennzeichnet, dass** der Leuchtenadapter (22) eine dachseitige Fahrzeugleuchte (15) oder einen adaptierten Leuchteneinsatz (30) und ggf. ein Zubehörteil (31), insbesondere eine Rückfahrkamera, ein Heckfeldbeleuchtung, eine Sensorik oder dgl., aufweist.

8. Rückwandträger nach einem der vorhergehenden Ansprüche, **dadurch gekennzeichnet, dass** eine dachseitige Fahrzeugleuchte (15) oder ein adaptierter Leuchteneinsatz (30) und/oder ein Leitungseinlass (32) und/oder ein Zubehörteil (31) am Halter (28) oder an einem den Adapterkorpus (25) und den Halter (28) umgebenden Adaptergehäuse (29) angeordnet ist/sind.

9. Rückwandträger nach einem der vorhergehenden Ansprüche, **dadurch gekennzeichnet, dass** der Stützrahmen (3) als bevorzugt U- oder L-förmiger Rahmenbügel (17) mit den Armen (18,19) ausgebildet und derart an das Fahrzeugheck (8) angepasst ist, dass der Rahmenbügel (17) die Hecktür(n) (9) des Fahrzeugs (2) mit Abstand außenseitig umgibt.

10. Rückwandträger nach einem der vorhergehenden Ansprüche, **dadurch gekennzeichnet, dass** der Stützrahmen (3) einen Dachträger (6) mit einem Fixiermittel (43) zur Abstützung und Befestigung am Fahrzeugdach (12) aufweist.

11. Rückwandträger nach einem der vorhergehenden Ansprüche, **dadurch gekennzeichnet, dass** der Rückwandträger (1) ein am Stützrahmen (3) und ggf. am Fahrzeug (2) beweglich, bevorzugt schwenkbar, gelagertes (5) Traggestell (4) aufweist.

12. Rückwandträger nach einem der vorhergehenden Ansprüche, **dadurch gekennzeichnet, dass** das Traggestell (4) einen Gestellbügel (33) mit einem Lager (5) und mit einem Tragelement (34) für eine Last aufweist.

13. Rückwandträger nach einem der vorhergehenden Ansprüche, **dadurch gekennzeichnet, dass** das Traggestell (4) eine Verstelleinrichtung (35), insbesondere eine Hubeinrichtung, mit einer festen oder umstellbaren Übersetzung (48) zwischen einem Gestellbügel (33) und dem Tragelement (34) aufweist.

14. Fahrzeug (2) mit einem Aufbau (7), insbesondere einem Kastenaufbau, mit einer Hecktüre (9) und einem Türscharnier (10) und mit einem am Heck (8) montierten Rückwandträger (1), wobei der Rückwandträger (1) einen Stützrahmen (3) mit einem oberen Querarm (18) sowie einem aufrechten Längsarm (19) und mit einem Befestigungsmittel (20) zur Heckmontage aufweist, wobei das Befestigungsmittel (20) einen Adapter (21) zur Befestigung eines Längsarms (19) am Fahrzeug (2) aufweist, **dadurch gekennzeichnet, dass** der Rückwandträger (1) nach mindestens einem der Ansprüche 1 bis 13 ausgebildet ist.

15. Fahrzeug nach Anspruch 14, **dadurch gekennzeichnet, dass** das Fahrzeug (2) als Kraftfahrzeug, insbesondere als Kastenwagen oder Geländewagen, insbesondere als Wohnmobil oder als Bus ausgebildet ist.

## Claims

1. Rear-wall rack for installing on the rear (8) of a vehicle (2) with a rear door (9) and a door hinge (10), wherein the rear-wall rack (1) has a supporting frame (3) with an upper transverse arm (18) and an upright longitudinal arm (19) and with a fastening means (20) for installing on the rear, wherein the fastening means (20) has an adapter (21) for fastening a longitudinal arm (19) on the vehicle (2), **characterized in that** the fastening means (20) has a lamp adapter (22) for fastening the transverse arm (18) on a roof-side vehicle lamp (15) or the mount (16) for said lamp on the vehicle (2).

2. Rear-wall rack according to Claim 1, **characterized in that** the adapter (21) is designed in the form of a hinge adapter (21) which is provided, and designed, for fastening a longitudinal arm (19) on a vehicle-mounted external hinge plate (11) of a door hinge (10) of the vehicle (2).

3. Rear-wall rack according to Claim 1 or 2, **characterized in that** the fastening means (20), in particular the adapters (21, 22), retains/retain the supporting frame (3), in the installed position, at a distance from the rear (8) of the vehicle.

4. Rear-wall rack according to Claim 1, 2 or 3, **characterized in that** a hinge adapter (21) has a supporting element (23) with a fixing element (24) or an angled flange plate (45) and can be fastened on the vehicle (2) by the fastening means, in particular screws, of a vehicle-mounted, external hinge plate (11).

5. Rear-wall rack according to one of the preceding claims, **characterized in that** the lamp adapter (22) has a holder (28), which can be connected to the vehicle (2) and is intended for retaining the supporting frame (3), in particular the transverse arm (18), in a spaced-apart manner.

6. Rear-wall rack according to one of the preceding claims, **characterized in that** the lamp adapter (22) has a basic adapter structure (25), which can be connected to the holder (28) and is adapted to a roof-side lamp mount (16), in particular a bodywork cutout, of the vehicle (2) and can be anchored there.

7. Rear-wall rack according to one of the preceding claims, **characterized in that** the lamp adapter (22) has a roof-side vehicle lamp (15) or an adapted lamp insert (30) and possibly an accessory part (31), in particular a reversing camera, a rear-area-illuminating means, a sensor unit or the like.

8. Rear-wall rack according to one of the preceding claims, **characterized in that** a roof-side vehicle lamp (15) or an adapted lamp insert (30) and/or a cable inlet (32) and/or an accessory part (31) are/is arranged on the holder (28) or on an adapter housing (29), which encloses the basic adapter structure (25) and the holder (28).

9. Rear-wall rack according to one of the preceding claims, **characterized in that** the supporting frame (3) is designed in the form of a preferably U-shaped or L-shaped frame bracket (17) with the arms (18, 19), adapted to the rear (8) of the vehicle such that the frame bracket (17) encloses the outside of the rear door(s) (9) of the vehicle (2), at a distance therefrom.

10. Rear-wall rack according to one of the preceding claims, **characterized in that** the supporting frame (3) has a roof rack (6) with a fixing means (43) for supporting and fastening purposes on the vehicle roof (12).

11. Rear-wall rack according to one of the preceding claims, **characterized in that** the rear-wall rack (1) has a load-bearing framework (4) which is mounted in a movable, preferably pivotable, manner on the supporting frame (3), and possibly on the vehicle (2).

12. Rear-wall rack according to one of the preceding claims, **characterized in that** the load-bearing framework (4) has a framework bracket (33) with a bearing (5) and with a load-bearing element (34) for a load.

13. Rear-wall rack according to one of the preceding claims, **characterized in that** the load-bearing framework (4) has an adjustment device (35), in particular a lifting device, with a fixed or adjustable transmission means (48) between a framework bracket (33) and the load-bearing element (34).

14. Vehicle (2) with a superstructure (7), in particular a box superstructure, with a rear door (9) and a door hinge (10) and with a rear-wall rack (1) installed on the rear (8), wherein the rear-wall rack (1) has a supporting frame (3) with an upper transverse arm (18) and an upright longitudinal arm (19) and with a fastening means (20) for installing on the rear, wherein the fastening means (20) has an adapter (21) for fastening a longitudinal arm (19) on the vehicle (2), **characterized in that** the rear-wall rack (1) is designed in accordance with at least one of Claims 1 to 13.

15. Vehicle according to Claim 14, **characterized in that** the vehicle (2) is designed in the form of a motor vehicle, in particular of a van or off-road vehicle, in particular in the form of a camper van or of a bus.

## Revendications

1. Porte-charge arrière pour le montage à l'arrière (8) d'un véhicule (2) avec une porte arrière (9) et une charnière de porte (10), dans lequel le porte-charge arrière (1) présente un cadre de support (3) avec un bras transversal supérieur (18) ainsi qu'un bras longitudinal vertical (19) et avec un moyen de fixation (20) pour le montage arrière, dans lequel le moyen de fixation (20) présente un adaptateur (21) pour la fixation d'un bras longitudinal (19) au véhicule (2), **caractérisé en ce que** le moyen de fixation (20) présente un adaptateur de feu (22) pour la fixation du bras transversal (18) à un feu de toit (15) du véhicule ou à son logement de feu (16) du véhicule (2).

2. Porte-charge arrière selon la revendication 1, **caractérisé en ce que** l'adaptateur (21) est configuré en adaptateur à charnière (21), qui est prévu et configuré en vue de la fixation d'un bras longitudinal (19) à une plaque de charnière externe (11) solidaire du véhicule d'une charnière de porte (10) du véhicule (2).

3. Porte-charge arrière selon la revendication 1 ou 2, **caractérisé en ce que** le moyen de fixation (20), en particulier les adaptateurs (21, 22), soutient/- soutiennent le cadre de support (3) en position de montage à distance de l'arrière (8) du véhicule.

4. Porte-charge arrière selon la revendication 1, 2 ou 3, **caractérisé en ce qu'**un adaptateur à charnière (21) présente un élément de support (23) avec un élément de fixation (24) ou une plaque d'aile coudée (45) et peut être fixé au véhicule (2) avec les moyens de fixation, en particulier des vis, d'une plaque de charnière externe (11) solidaire du véhicule.

5. Porte-charge arrière selon l'une quelconque des revendications précédentes, **caractérisé en ce que** l'adaptateur de feu (22) présente un support (28) à assembler au véhicule (2) pour le maintien à distance du cadre de support (3), en particulier du bras transversal (18).

6. Porte-charge arrière selon l'une quelconque des revendications précédentes, **caractérisé en ce que** l'adaptateur de feu (22) présente un corps d'adaptateur (25) à assembler au support (28), qui est adapté à un logement de feu de toit (16), en particulier à une découpe de la carrosserie, du véhicule (2) et peut y être ancré.

7. Porte-charge arrière selon l'une quelconque des revendications précédentes, **caractérisé en ce que** l'adaptateur de feu (22) présente un feu de toit (15) du véhicule ou une monture de feu adaptée (30) et éventuellement une pièce d'accessoire (31), en particulier une caméra de recul, un éclairage du champ arrière, un détecteur ou analogue.

8. Porte-charge arrière selon l'une quelconque des revendications précédentes, **caractérisé en ce qu'**un feu de toit (15) du véhicule ou une monture de feu adaptée (30) et/ou une entrée de fils (32) et/ou une pièce d'accessoire (31) est/sont disposé(s) sur le support (28) ou sur un boîtier d'adaptateur (29) entourant le corps d'adaptateur (25) et le support (28).

9. Porte-charge arrière selon l'une quelconque des revendications précédentes, **caractérisé en ce que** le cadre de support (3) est configuré de préférence en un étrier de cadre (17) en forme de U ou de L avec les bras (18, 19) et est adapté à l'arrière (8) du véhicule de telle manière que l'étrier de cadre (17) entoure à distance vers l'extérieur la/les porte(s) arrière (9) du véhicule (2).

10. Porte-charge arrière selon l'une quelconque des revendications précédentes, **caractérisé en ce que** le cadre de support (3) présente un support de toit (6) avec un moyen de fixation (43) pour le support et la fixation au toit (12) du véhicule.

11. Porte-charge arrière selon l'une quelconque des revendications précédentes, **caractérisé en ce que** le porte-charge arrière (1) présente une structure de support (4) montée (5) sur le cadre de support (3) et éventuellement sur le véhicule (2) de façon mobile, de préférence pivotante.

12. Porte-charge arrière selon l'une quelconque des revendications précédentes, **caractérisé en ce que** la structure de support (4) présente une structure en étrier (33) avec un palier (5) et avec un élément de support (34) pour une charge.

13. Porte-charge arrière selon l'une quelconque des revendications précédentes, **caractérisé en ce que** la structure de support (4) présente un dispositif de déplacement (35), en particulier un dispositif de levage, avec une transmission fixe ou réversible (48) entre une structure en étrier (33) et l'élément de support (34).

14. Véhicule (2) avec une superstructure (7), en particulier une superstructure fermée, avec une porte arrière (9) et une charnière de porte (10) avec un porte-charge arrière (1) monté à l'arrière (8), dans lequel le porte-charge arrière (1) présente un cadre de support (3) avec un bras transversal supérieur (18) ainsi qu'un bras longitudinal vertical (19) et avec un moyen de fixation (20) pour le montage arrière, dans lequel le moyen de fixation (20) présente un adaptateur (21) pour la fixation d'un bras longitudinal (19) au véhicule (2), **caractérisé en ce que** le porte-charge arrière (1) est réalisé selon au moins une des revendications 1 à 13.

15. Véhicule selon la revendication 14, **caractérisé en ce que** le véhicule (2) est un véhicule automobile, en particulier une camionnette fermée ou un véhicule tout terrain, en particulier un motor-home ou un autocar.
